# EUROPÄISCHE PATENTANMELDUNG

(11) **EP 0 698 995 A1**
(43) Veröffentlichungstag der Anmeldung: **28.02.1996**
(21) Anmeldenummer: 95112269.6
(22) Anmeldetag: 04.08.1995
(51) Int. Cl.: H04N 3/09, H04N 5/33

(54) **Schaltungsanordnung zur Erzeugung von Synchronisiersignalen in einem Wärmebildgerät**

(30) Priorität: 25.08.1994 CH 2605/94
(71) Anmelder: Siemens-Albis Aktiengesellschaft, CH-8047 Zürich (CH)
(72) Erfinder: Fosco, Guido, CH-8957 Spreitenbach (CH); Schenk, Michael, CH-Adliswil (CH)

(57) **Zusammenfassung**

Die erfindungsgemässe Schaltungsanordnung dient zur Erzeugung von Zeilen- und Bildsynchronisiersignalen (zsy, bsy) in einem Wärmebildgerät (WBG), bei dem Infrarotstrahlung (ir) über eine Eingangsoptik (EO) und ein von einem Motor (M) angetriebenes Polygonrad (IR-PR) einem Detektor (D) zugeführt wird. Dazu ist ein mit einem Referenzfrequenzgenerator (RG) verbundener Frequenzteiler (DIV) vorgesehen ist, der an einem ersten Ausgang die Zeilensynchronisiersignale (bsy) abgibt, dessen zweiter Ausgang mit dem Takteingang einer Kippstufe (FF) und dessen dritter Ausgang mit dem ersten Eingang eines Phasendetektors (PD) verbunden ist. Der Ausgang des Phasendetektors (PD) ist über eine Filterstufe (FR) mit dem Eingang einer Verstärkerstufe (DR) verbunden, die zur Ansteuerung des Motors (M) vorgesehen ist. Ferner sind Sensoren (ZS, BS) vorgesehen, die in Abhängigkeit des Drehwinkels des Polygonrades (IR-PR) Zeilen- bzw. Bildwechselsignale (dt, bw) dem zweiten Eingang des Phasendetektors (PD) bzw. dem Signaleingang der Kippstufe (FF) zuführen. Am Ausgang der Kippstufe (FF) können dadurch Bildsynchronisiersignale (bsy) abgegeben werden, die frei von Phasenrauschen sind.

## Beschreibung

Die vorliegende Erfindung betrifft eine Schaltungsanordnung nach dem Oberbegriff des Patentanspruchs 1.

Nachtsichtgeräte können in verschiedene Gruppen unterteilt werden. Bekannt sind aktive Infrarot-(IR)-Nachtsichtgeräte, die zur Überwachung eines von einem Infrarot-Strahler beleuchteten Geländes vorgesehen sind. Geräte, die mit Restlichtverstärkern versehen sind, sind in der Lage, Bilder von z.B. nur durch Sternenlicht beleuchtetem Gelände aufzunehmen. Diese Geräte werden, ebenso wie die Wärmebildgeräte, den passiven Nachtsichtgeräten zugezählt. Wärmebildgeräte nutzen den thermischen Kontrast aus, den beobachtete Gegenstände gegenüber ihrer Umgebung besitzen. Wärmebildgeräte sind dabei für den Empfang von Strahlung im Wellenlängenbereich von 3 - 5 µm oder 8 - 13 µm vorgesehen, welche die Atmosphäre ungeschwächt passieren kann.

Wärmebildgeräte können z.B. zur Früherkennung von Brandherden in feuergefährdeten Gebieten oder für die nächtliche Zutrittskontrolle zu geschützten Gebäuden verwendet werden. Insbesondere für diese Verwendungszwecke, bei denen mit dem Wärmebildgerät immer dasselbe Gebiet zu überwachen ist, wird das aufgenommene Bild von einem fest installierten Wärmebildgerät vorzugsweise an einen Fernsehmonitor übertragen, der z.B. in einem Kontrollraum einem Beobachter zur Verfügung steht. Als Fernsehmonitoren werden einfachheitshalber handelsübliche Geräte eingesetzt, die nach bekannten Normen arbeiten. Das Fernsehsignal kann im Wärmebildgerät selbst oder, wie in der beispielsweise angegebenen Ausführung der Erfindung, in einer Kamera erzeugt werden, welche zur Aufnahme des sichtbaren Bildes vorgesehen ist, das im Wärmebildgerät erzeugt wird. Die Frequenzen, mit denen einzelne Zeilen und Bilder aus der beobachteten Szene durch das Wärmebildgerät abgetastet werden, entsprechen den Frequenzen der normierten Synchronimpulse des Fernsehsignals (z.B. gemäss CCIR-Norm) jedoch normalerweise nicht. Bilder im Bereich sichtbarer Strahlung, die von einem Wärmebildgerät an eine gemäss der CCIR-Norm arbeitende Kamera abgegeben werden, können von dieser daher nicht störungsfrei an den angeschlossenen Fernsehmonitor übertragen werden. Falls in der Kamera ein Bildwechsel vollzogen wird, währenddem das Wärmebildgerät Strahlung aus der Szene aufnimmt und in sichtbares Licht umwandelt, so ist diese Bildinformation verloren. Einzelne Zeilen oder Gruppen von gleichzeitig gelesenen Zeilen werden von der Kamera daher unvollständig wiedergegeben. Entlang den vom Wärmebildgerät abgetasteten Zeilen erscheint daher ein schwarzer Balken der sich mit einer Geschwindigkeit über das Bild bewegt, die proportional zur Grösse der Differenz zwischen den Bildwechselfrequenzen ist.

Der vorliegenden Erfindung liegt daher die Aufgabe zugrunde, eine Schaltungsanordnung anzugeben, durch die das Wärmebildgerät mit einem damit verbundenen Aufnahme- bzw. Bildwiedergabegerät derart synchronisierbar ist, dass die beschriebenen Bildstörungen beseitigt werden.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Die erfindungsgemässe Schaltungsanordnung erlaubt die zeitgenaue Erzeugung der für den Fernsehmonitor bzw. für die Kamera benötigten Zeilen- und Bildsynchronisiersignale.

In den nachfolgend beschriebenen Wärmebildgeräten WBG kommt ein Polygonrad zum Einsatz, anhand dessen die beobachtete Szene zeilenweise aufgenommen wird. Die Zeilen- und Bildwechselfrequenzen dieser Geräte sind daher von der Drehzahl des Polygonrades abhängig. Zeilen- und Bildwechselsignale können daher durch die Messung der Drehwinkel des Polygonrades gewonnen werden. Durch Gleichlaufschwankungen des Polygonrades wird jedoch ein Phasenrauschen der Zeilen- und Bildwechselsignale verursacht, durch das Synchronisationsstörungen ausgelöst werden können. Durch die erfindungsgemässe Schaltungsanordnung gelingt jedoch die Abgabe von Synchronisiersignalen, die frei von Phasenrauschen sind.

Die Erfindung wird nachfolgend anhand einer Zeichnung beispielsweise näher erläutert. Dabei zeigt:
- Fig. 1: den Aufbau eines Wärmebildgerätes mit angeschlossener Kamera und
- Fig. 2: die erfindungsgemässe Schaltungsanordnung, die mit dem Wärmebildgerät und der Kamera verbunden ist.

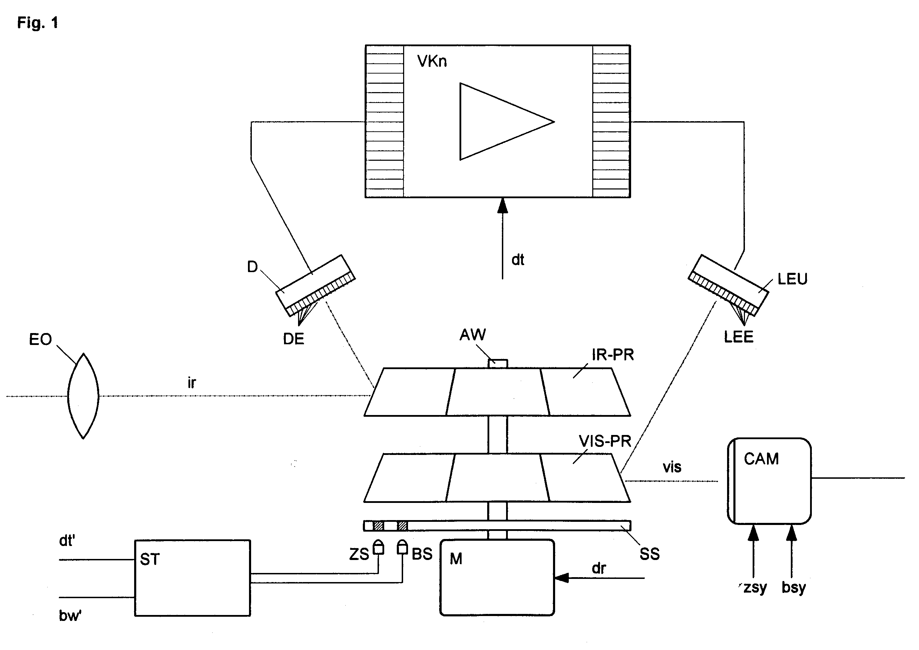

Fig. 1 zeigt die wesentlichen Bestandteile eines Wärmebildgerätes WBG, das Infrarotstrahlung ir aus einer Szene aufnimmt und über eine Eingangsoptik EO sowie ein erstes Polygonrad IR-PR einem Detektor D bzw. dessen Detektorelementen DE zuführt. Der Ausgang jedes Detektorelementes DE ist mit dem Eingang eines Verstärkerkanals der Verstärkerbaugruppe VKn verbunden. Die von den Verstärkerkanälen abgegebenen Signale werden von lichtemittierenden Elementen LEE einer Einheit LEU in sichtbare optische Signale vis umgewandelt und über ein zweites Polygonrad VIS-PR, das synchron zum ersten Polygonrad IR-PR läuft, an eine Kamera CAM abgegeben. Das z.B. acht Seiten aufweisende erste Polygonrad IR-PR ist dazu vorgesehen, die Infrarotstrahlung aus der beobachteten Szene zeilenweise abzutasten und weist für das beschriebene Beispiel eine Drehgeschwindigkeit von 25 Umdrehungen pro Sekunde auf. Pro Umdrehung werden z.B. zwei Halbbilder aufgenommen. Durch die Anzahl n vorhandener Detektorelemente DE wird bestimmt, wieviele Zeilen des von einer Polygonseite gespiegelten Bildes aufgenommen werden. Mit jeder Drehung der synchronlaufenden Polygonräder werden daher n * 8 Zeilen gelesen bzw. geschrieben. Indem für jede Polygonseite eine unterschiedliche Neigung vorgesehen ist, können alle Zeilen aus dem über die Eingangsoptik EO empfangenen Bild, vorzugsweise aufgeteilt in zwei Halbbilder, den Detektorelementen DE zugeführt werden. Die Anzahl Seiten sowie deren Neigungen des zweiten Polygonrades VIS-PR sind entsprechend denjenigen des ersten Polygonrades IR-PR gewählt, so dass die von den lichtemittierenden Elementen LEE abgegebenen Strahlen vis zeilenweise zu einem sichtbaren Bild zusammengesetzt werden. Durch einen Sensor ZS wird ein Zeilenwechsel bzw. der Übergang von einer Polygonseite, die Licht zum Detektor D bzw. zur Kamera CAM spiegelt, zur nächsten festgestellt. Dazu wird z.B. eine synchron zu den Polygonrädern IR-PR, VIS-PR laufende Scheibe SS mit Öffnungen vorgesehen, durch die während jedem Zeilen- und Bildwechsel Licht auf die Sensoren ZS, BS geführt wird. Für den Bereich zwischen dem Ende der letzten und dem Anfang der nächsten Zeile können daher Steuersignale für die Verstärkerbaugruppe VKn erzeugt werden, durch die die Verstärkerkanäle auf minimale Verstärkung gesteuert werden. Während dem Zeilenwechsel gelangen daher keine sichtbaren Strahlen vis zur Kamera CAM.

Falls keine Synchronisation zwischen der Kamera CAM und dem Wärmebildgerät vorliegt, geht die Information von n momentan vom Wärmebildgerät gelesenen Zeilen verloren, währenddem in der Kamera CAM ein Bildwechsel erfolgt. Auf dem Bild des mit der Kamera CAM verbundenen Fernsehmonitors treten daher schwarze Balken auf.

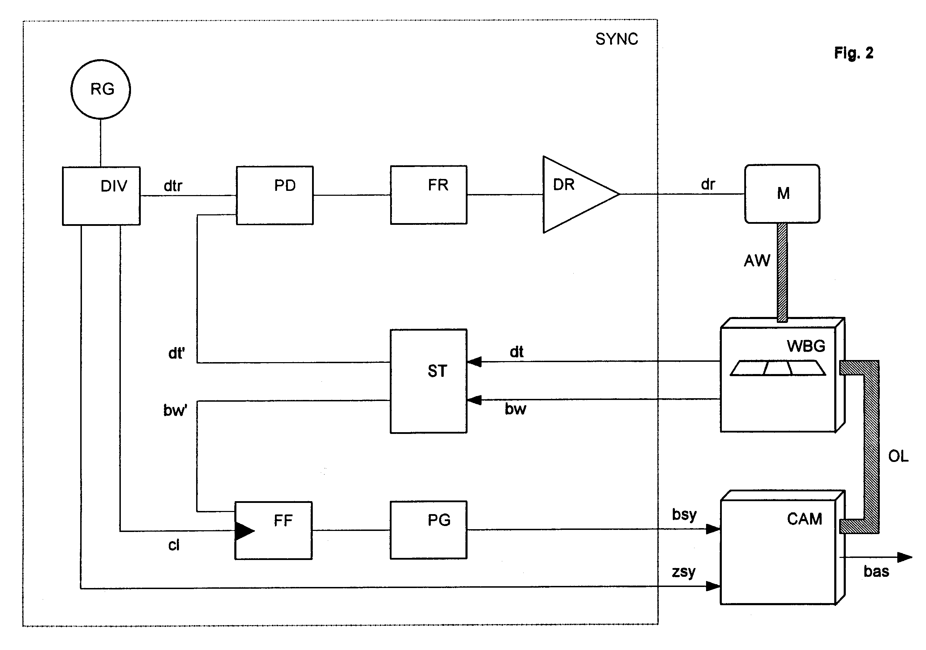

Anhand der in Fig. 2 gezeigten Schaltungsanordnung SYNC kann die Kamera CAM derart mit dem Wärmebildgerät WBG synchronisiert werden, dass Bild- und Zeilenwechsel starr aufeinander abgestimmt sind. Schatten oder Balken, die über das Bild wandern, werden dadurch beseitigt. Die Schaltungsanordnung SYNC weist einen Referenzfrequenzgenerator RG auf, der mit einem Frequenzteiler DIV verbunden ist, der ein Zeilenfrequenzsignal zsy der Frequenz f1 bzw. von 15625 Hz an die Kamera CAM, ein Referenzsignal dtr der Frequenz f2 bzw. von 200 Hz an einen Phasendetektor PD sowie ein Taktsignal cl der Frequenz f2 bzw. von 200 Hz an den Taktsignaleingang einer Kippstufe FF abgibt. Der Ausgang des Phasendetektors PD ist über eine Filter- und eine Verstärkerstufe FR bzw. DR mit einem Motor M verbunden, der über eine Antriebswelle AW die beiden Polygonräder IR-PR, VIS-PR antreibt. Das vom Sensor ZS gewonnene Zeilenfrequenzsignal dt des Wärmebildgerätes WBG wird über eine Steuerstufe ST dem zweiten Eingang des Phasendetektors PD zugeführt. Dadurch wird ein Phasenregelkreis gebildet, der die Drehzahl der Polygonräder IR-PR, VIS-PR derart regelt, dass die Zeilenfrequenz des Wärmebildgerätes WBG nahezu phasengleich an das vom Frequenzteiler DIV an den Phasendetektor PD abgegebene Referenzsignal dtr gekoppelt ist. Die Technik der Phasenregelkreise (PLL, Phase Locked Loops) ist z.B. in Herter/Röcker, Nachrichtentechnik, Carl Hanser Verlag, München 1976, Seiten 67 - 70 beschrieben. Da die Frequenz des Referenzsignals dtr und die Zeilenfrequenz zsy der Kamera CAM vom Referenzfrequenzgenerator RG abgeleitet sind, wird dadurch auch die Zeilenfrequenz des Wärmebildgerätes WBG mit der Zeilenfrequenz der Kamera CAM gekoppelt. Die oben beschriebenen Bildfehler werden hauptsächlich durch fehlende Synchronisation der Bildwechselfrequenzen verursacht. Dies ist besonders bei einzelnen Kameras CAM der Fall, bei denen ein Bild aufgenommen, zeilenweise abgetastet, gelöscht und nachfolgend neu wieder aufgebaut wird. Die Kameraröhre nimmt in diesem Fall auch Informationen auf, währenddem das Bild zeilenweise abgetastet wird. Abweichungen der Zeilenwechselfrequenzen (Wärmebildgerät mit q Zeilen pro Bild, Kamera CAM mit p Zeilen pro Bild bei synchronisierter Bildwechselfrequenz (z.B. je 50 Halbbilder pro Sekunde)) verursachen daher nicht in jedem Fall Störungen des Bildes. Für viele Anwendungen ist es jedoch von Vorteil, wenn auch die Zeilenfrequenzen aufeinander abgestimmt sind. Die Frequenz des Referenzsignals dtr wird dazu durch Teilung des an die Kamera CAM abgegebenen Zeilenfrequenzsignals zsy mit einer ganzen Zahl m gewählt. Eine vom Wärmebildgerät WBG dargestellte Zeile wird daher durch die Kamera CAM m-mal abgetastet, bis ein weiterer Zeilenwechsel gleichzeitig im Wärmebildgerät WBG und in der Kamera CAM erfolgt. Allenfalls weitere vorhandene Bildstörungen werden dadurch beseitigt.

Von der Schaltungsanordnung SYNC wird ferner ein Bildsynchronisiersignal bsy von 50 Hz an die Kamera abgegeben, das frei von Phasenrauschen (Jitter) ist. Das durch den Sensor BS (siehe Fig. 1) gewonnene Bildwechselsignal bw, dessen Phasenstabilität von Antrieb und Regelung der Polygonräder IR-PR, VIS-PR abhängt, weist normalerweise ein Phasenrauschen auf, welches weitere Synchronisationsfehler in der Kamera CAM verursachen könnte. Das Signal bw wird daher z.B. mittels einem Schmitt-Trigger in der Steuerstufe ST aufbereitet (ebenso das Signal dt) und dem nicht-invertierenden Eingang der Kippstufe FF zugeführt. Das aufbereitete Bildwechselsignal bw' wird daher erst nach dem Eintreffen eines Taktimpulses des Signals cl an den Ausgang der Kippstufe durchgeschaltet. Die Phasenschwankungen des Bildwechselsignals bw', das eine Frequenz von 25 Hz (200 Hz / 8 (Anzahl Seiten des Polygonrades)) liegen im Bereich von < 1 ms. Die Taktimpulse des Taktsignals cl liegen 5 ms (1/200 Hz) auseinander und werden vom Frequenzteiler DIV vorzugsweise derart zeitverzögert abgegeben, dass die Flanken der Bildwechselimpulse bw' immer vor dem Taktimpuls des Signals cl liegen, das dem Zeilenimpuls dt entspricht, der die zuletzt gelesene Zeile eines IR-Bildes abschliesst. Am Ausgang der Kippstufe FF wird daher mit einer Verzögerung von z.B. 2 ms ein Bildwechselsignal an die nachfolgende Stufe PG abgegeben, das frei von Phasenrauschen ist. In der Stufe PG wird die Frequenz des stabilisierten Bildwechselsignals verdoppelt. Ferner werden darin Impulse geformt, die zur Verarbeitung in der Kamera CAM geeignet sind.

Die Verzögerung der Signale cl kann ferner in einer Verzögerungsleitung bewirkt werden, die zwischen dem Frequenzteiler DIV und der Kippstufe FF vorgesehen wird.

Die optische Verbindung OL zwischen der Kamera CAM und dem Wärmebildgerät WBG, durch die das sichtbare Bild übertragen wird, ist in Fig. 2 nur schematisch dargestellt. In der Kamera CAM wird ein Bild-, Austast- und Synchronisiersignal bas gebildet, das der CCIR-Norm entspricht und an einen Fernsehmonitor und/oder an ein Aufzeichnungsgerät abgegeben wird.

Selbstverständlich kann die erfindungsgemässe Schaltungsanordnung auch mit weiteren Wärmebildgeräten, Kameras und Fernsehmonitoren verwendet werden, die andere Zeilen- und Bildwechselfrequenzen aufweisen. Die Frequenz des Referenzfrequenzgenerators RG und die Teilverhältnisse des Frequenzteilers sind dabei entsprechend anzupassen.

Vorteilhaft könnten ferner die parallel gelesenen Bildzeilen in Speichern abgelegt und seriell ausgelesen werden. Zur Anpassung an die höhere Zeilenfrequenz des Fernsehmonitors könnte die gespeicherten Zeilen mehrfach ausgelesen werden, bevor die neuen Zeilen eingeschrieben werden. Anhand dieser Bildsignale und der gewonnenen Zeilen- und Bildsynchronisiersignale könnte daher ein BAS-Signal gemäss CCIR-Norm gebildet werden, wie es z.B. in B. Morgenstern, Farbfernsehtechnik, Teubner Studienskripten, B.G. Teubner Verlag, Stuttgart 1983, Seiten 89 bis 91 beschrieben ist.

## Patentansprüche

1. Schaltungsanordnung zur Erzeugung von Zeilen- und Bildsynchronisiersignalen (zsy, bsy) in einem Wärmebildgerät (WBG), bei dem Infrarotstrahlung (ir) über eine Eingangsoptik (EO) und ein von einem Motor (M) angetriebenes Polygonrad (IR-PR) einem Detektor (D) zugeführt wird, **dadurch gekennzeichnet**, dass ein mit einem Referenzfrequenzgenerator (RG) verbundener Frequenzteiler (DIV) vorgesehen ist, der an einem ersten Ausgang die Zeilensynchronisiersignale (zsy) abgibt, dessen zweiter Ausgang mit dem Takteingang einer Kippstufe (FF) und dessen dritter Ausgang mit dem ersten Eingang eines Phasendetektors (PD) verbunden ist, dessen Ausgang über eine Filterstufe (FR) mit dem Eingang einer Verstärkerstufe (DR) verbunden ist, die zur Steuerung des Motors (M) vorgesehen ist und dass Sensoren (ZS, BS) vorgesehen sind, die in Abhängigkeit des Drehwinkels des Polygonrades (IR-PR) Zeilen- bzw. Bildwechselsignale (dt, bw) dem zweiten Eingang des Phasendetektors (PD) bzw. dem Signaleingang der Kippstufe (FF) zuführen, an deren Ausgang das phasenrauschenfreie Bildwechselsignal (bsy) abgegeben wird.

2. Schaltungsanordnung nach Anspruch 1, **dadurch gekennzeichnet**, dass der Frequenzteiler (DIV) am ersten Ausgang zur Abgabe des Signals (zsy) mit der Frequenz f1, am zweiten und dritten Ausgang zur Abgabe eines Signals (cl) bzw. (dtr) der Frequenz f2 vorgesehen ist und dass die Frequenz f1 bzw. f2 der Zeilenfrequenz des zu synchronisierenden Gerätes (CAM) bzw. des Wärmebildgerätes (WBG) entspricht.

3. Schaltungsanordnung nach Anspruch 2, **dadurch gekennzeichnet**, dass die Frequenz f1 einem ganzzahligen Vielfachen der Frequenz f2 entspricht.

4. Schaltungsanordnung nach Anspruch 2 oder 3, **dadurch gekennzeichnet**, dass der Frequenzteiler (DIV) zur verzögerten Abgabe des Signals (cl) vorgesehen ist oder dass der zweite Ausgang des Frequenzteilers (DIV) über eine Verzögerungsleitung mit der Kippstufe (FF) verbunden ist.

5. Schaltungsanordnung nach einem der Ansprüche 1 - 4, **dadurch gekennzeichnet**, dass der Detektor (D) n zur Aufnahme von Bildzeilen vorgesehene Detektorelemente (DE) aufweist, die über eine Verstärkerbaugruppe (VKn), die n Verstärkerkanäle aufweist, mit einer Speichereinheit verbunden ist, in die die Daten der parallel aufgenommenen Bildzeilen einschreibbar und seriell auslesbar sind.

6. Schaltungsanordnung nach einem der Ansprüche 1 - 4, **dadurch gekennzeichnet**, dass der Detektor (D) n zur Aufnahme von Bildzeilen vorgesehene Detektorelemente (DE) aufweist, die je über einen Verstärkerkanal mit lichtemittierenden Elementen (LEE) verbunden sind, welche zur Abgabe von sichtbarem Licht über ein zweites Polygonrad (VIS-PR) an eine Kamera (CAM) vorgesehen ist, die mit einem Fernsehmonitor verbindbar ist und dass der Kamera (CAM) die Zeilensynchronisier- (zsy) und Bildwechselsignale (bsy) zugeführt werden.
